# EUROPEAN PATENT SPECIFICATION

(11) **EP 2 538 590 B1**
(45) Date of publication and mention of the grant of the patent: **11.09.2013**
(21) Application number: 11170518.2
(22) Date of filing: 20.06.2011
(51) Int. Cl.: H04J 14/02

(54) **Communication system and method for transmitting data to one or more groups of nodes in a communication system**
Kommunikationssystem und Verfahren zum Senden von Daten an eine oder mehrere Gruppen von Knoten in einem Kommunikationssystem
Système de communication et procédé pour transmettre des données à un ou plusieurs groupes de noeuds dans un système de communication

(43) Date of publication of application: 26.12.2012
(73) Proprietor: NTT DoCoMo, Inc., Chiyoda-ku Tokyo 100-6150 (JP)
(72) Inventor: Choi, Changsoon, 80335 München (DE); Biermann, Thorsten, 85764 Oberschleißheim (DE); Wei, Qing, 81737 München (DE)
(74) Representative: Zinkler, Franz

(56) References cited:
- US-A1- 2006 045 525
- JUNG-HYUNG MOON ET AL: "Overlay of broadcasting signal in a WDM-PON", OFCNFOEC. OPTICAL FIBER COMMUNICATION CONFERENCE AND NATIONALFIBER OPTIC ENGINEERS CONFERENCE,, 1 January 2006 (2006-01-01), page 3PP, XP009093950, DOI: 10.1109/OFC.2006.215757

## Description

Embodiments of the invention relate to wireless communication systems, more specifically to a central node for a communication system having a plurality of nodes coupled thereto by a passive optical network, a wireless communication system, an optical multiplexer/demultiplexer device for a central node of a communication system, and a method for transmitting data to one or more groups of nodes in a communication system. More specifically, embodiments refer to the field of passive optical networks (PON), for example wavelength division multiplexing passive optical networks (WDM-PON), mobile backhaul networks, radio access networks, multicast approaches and broadcast approaches in coordinated multipoint (CoMP) transmission/reception systems.

Recently, wavelength division multiplexing passive optical networks (WDM-PON) have attracted interest in fiber-to-the-home services because of their potential to deliver more than Gbps capacity to each subscriber. The application is also extended to future mobile backhaul networks for LTE-Advanced and beyond, as described by N.Cheng and F. Effenberger, "WDM-PON: Systems and Technologies", ECOC Workshop, Torino, Italy, 2010. For example, for coordinated multipoint systems (CoMP Systems) wavelength-division multiplexing passive optical networks is of interest.

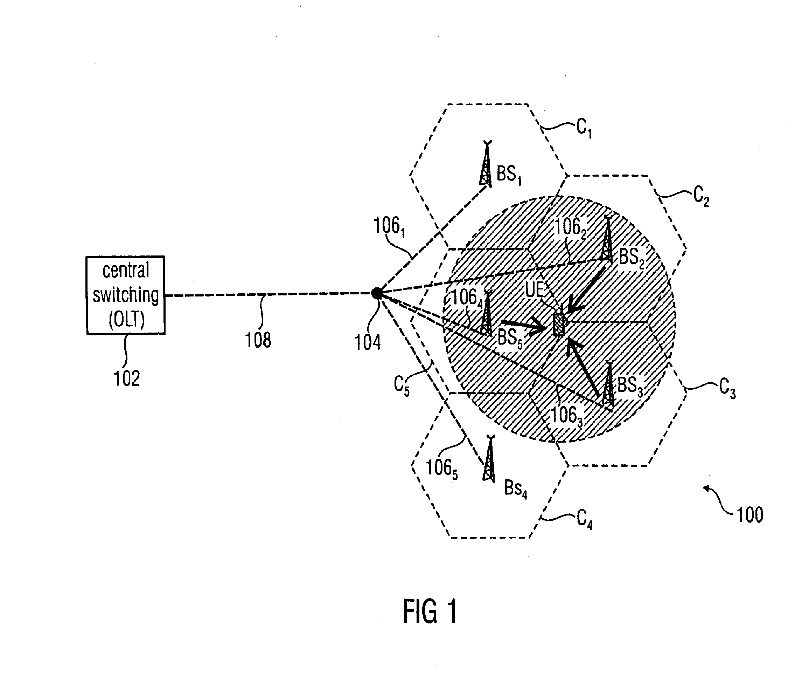

In accordance with the LTE-Advanced approach, each base station (BS), more precisely speaking each sector of a base station needs to support more than one Gbps transmission. Additional backhaul network capacity is necessary to support coordinated multi-point (CoMP) systems using multiple BSs to share the information and/or user data through mobile backhaul networks, as described by M.Sawahashi, Y. Kishiyama, A. Morimoto, D. Nishikawa and M. Tanno, "Coordinated multipoint transmission/reception techniques for LTE-advanced" IEEE wireless communications, vol. 17, issue 3, pp. 26 to 34, 2010. WDM-PON promises a virtually point-to-point link between a central node (OLT = optical line terminal) and a local node (ONU = optical network unit) by utilizing WDM techniques which is capable of providing several Gbps transmission to each ONU in which one base station with three or six sectors can be integrated. Fig. 1 depicts a schematic representation of a section of a wireless communication network used for implementing a coordinated multi-point system using a mobile backhaul network. The network 100 comprises a central switching terminal 102, also referred to as optical line terminal OLT. The network comprises a plurality of cells C₁ to C₅ each comprising a respective base station BS₁, BS₂, BS₃, BS₄ and BS₅. Each of the base stations BS₁ to BS₂ is connected to a passive remote node 104 via a respective optical fiber connection 106₁ to 106₅. The passive remote node 104 is coupled to the OLT 102 via an optical fiber 108. The OLT 102, the node 104 and the fibers 106₁ to 106₅ and 108 form the mobile backhaul network of the network 100. Fig. 1 shows a user equipment UE that, in accordance with the coordinated multi-point approach, is served by three base stations BS₂, BS₃ and BS₅ within the range (see circle 110) of the user equipment (see the respective arrows pointing from the base stations towards the user equipment).

Fig. 1 shows how CoMP operates with the support of the mobile backhaul network. For CoMP joint processing techniques, multiple base stations jointly transmit downlink data to one or more UEs which allows to exploit higher multiplexing gain of MIMO systems by increasing the number of antennas. In order to support this approach, mobile backhaul networks provide user data to multiple base stations which cooperatively serve a single user equipment. For example, considering a situation as depicted in Fig. 1, when a further user equipment is served by another subset of base stations, the respective base stations associated with the respective user equipment need to be provided with the necessary data for implementing the coordinated multipoint schemes. This requires multicasting approaches that allow transmitting data to multiple destinations. Besides the just-mentioned CoMP approach, there are several other applications that need multicasting capabilities, for example paging and multimedia broadcast/multicast services MBMS. Thus, it would be desirable to use WDM-PON for mobile backhaul network applications to provide L1 layer (physical layer) multicasting.

While IP layer multicasting is known and may provide for the required functionality as L 1 multicasting does, it cannot help multi-copy multicasting which needs to duplicate one multicasting packet into several packets. It cannot avoid causing larger network overhead which results in an inefficient network operation. The L1 layer multicasting is the most promising approach from the view point of network efficiency, and most of mobile backhaul network technologies such as digital subscriber line, T1, time-domain division passive optical network (TDM-PON) do not have a problem to implement L1 multicasting/broadcasting because all local nodes share one physical medium (line) in such approaches.

However, this is not the case in WDM-PON in accordance with which each local node is allocated with one wavelength but not with a specific physical transmission medium.

A large number of publications exist that concern broadcasting functions in WDM-PON. One of the techniques that can be easily be implemented is to use a broad spectrum optical source, for example a light emitting diode, in the optical line terminal, as described by J. H. Moon, K. M. Choi and C. H. Lee, "Overlay of broadcasting signal in a WDM-PON", Optical Fiber Communication Conference, 2006.

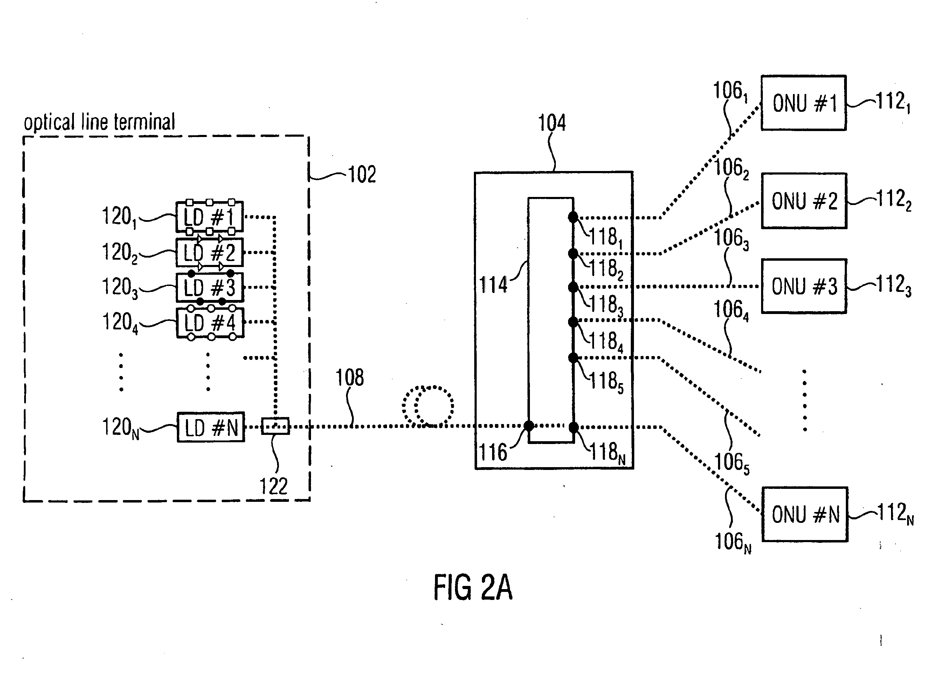

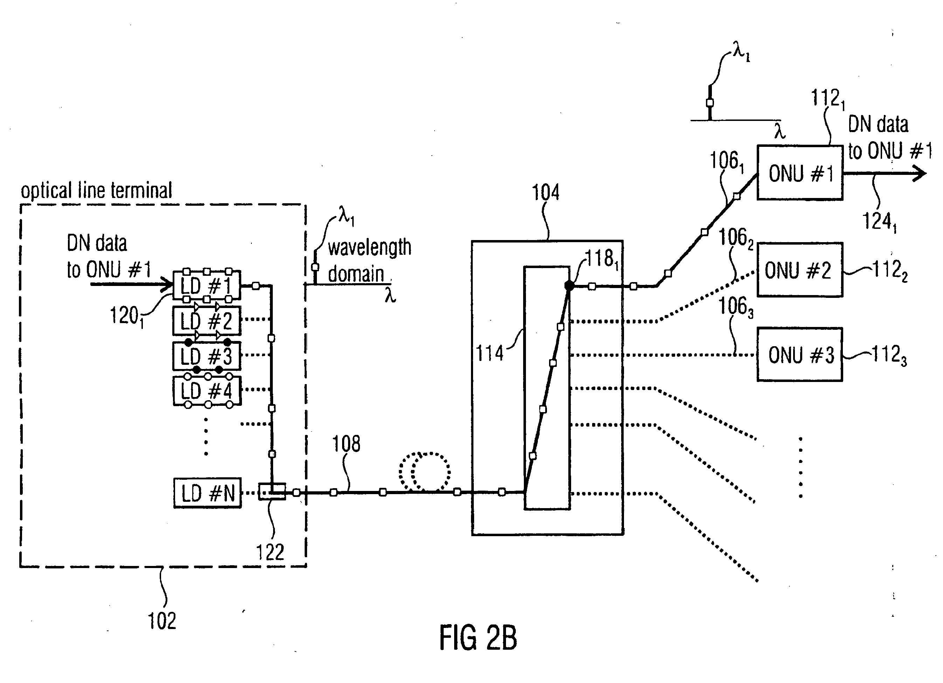

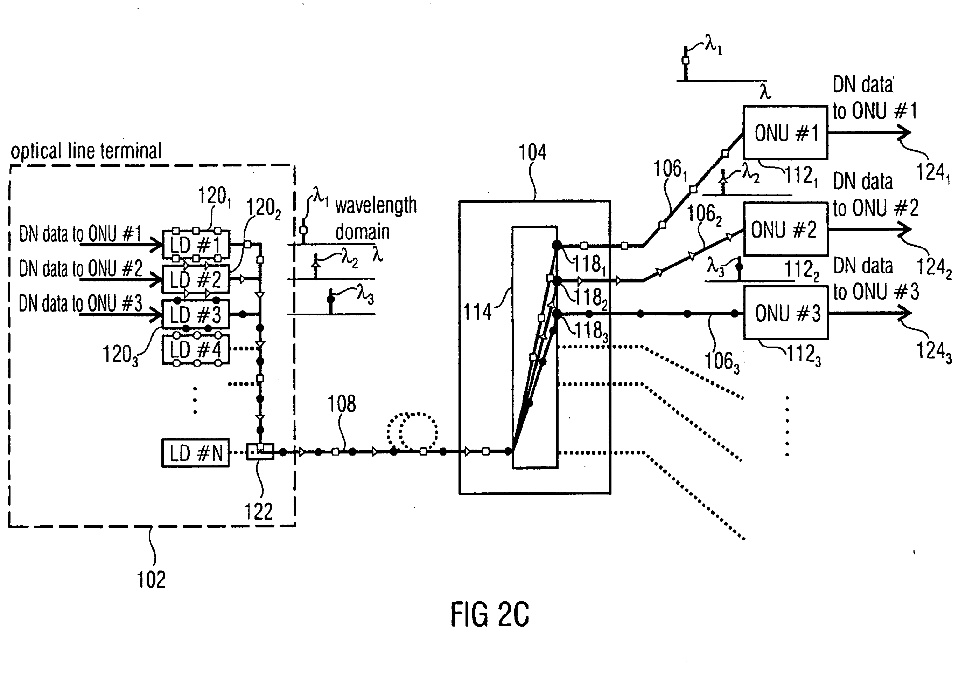

Fig. 2 describes the architecture and functionality of a WDM-PON hardware, wherein Fig. 2(a) is a schematic representation of the hardware architecture and Fig. 2(b) and Fig. 2(c) describe the functionality of such an architecture in further detail. In Fig. 2(a) a schematic representation of the optical line terminal 102 is shown (also see Fig. 1) which is connected via the fiber 108 to the passive remote node 104 connected in turn via the respective optical fiber connections 106₁ to 106_{N} to the respective optical network units 112₁ to 112_{N}. The optical network units 112₁ to 112₆ comprise the respective base stations in a network as, for example, shown in Fig. 1. The passive remote node 104 comprises an arrayed waveguide grating (AWG) 114 having one OLT-side port 116 coupled to the fiber 108 connecting the node 104 to the OLT 102. Further, the AWG 114 comprises a plurality of ONU-side ports 118₁ to 118_{N} coupled to the respective fibers 106₁ to 106_{N} to be connected to the respective optical network units 112₁ to 112_{N}. The OLT 102 comprises a plurality of laser diodes 120₁ to 120_{N} each operating at a different wavelength λ₁ to λ_{N}, and each wavelength being associated with an optical receiver in one of the optical network units. For example, the laser diode 120₁ operates as a wavelength at which a photo detector in ONU 112₁ receives a signal. Likewise, the laser diode 120₂ operates at an optical wavelength at which a photo detector in ONU 112₂ receives light signals, and so on. The output ports of the respective laser diodes 120₁ to 120_{N} are coupled by an optical coupler 122 that is coupled to the fiber 108.

The functionality of the architecture depicted in Fig. 2(a) will now be described in further detail with regard to Figs. 2(b) and (c). In Fig. 2(b) it is desired to transmit data from the OLT 102 to the first ONU 112₁ (for example base station BS₁ in Fig. 1). The downlink data for ONU 112₁ is applied to laser diode 120₁ so that the light signal output by laser diode 120₁ is modulated with the downlink data to be provided to ONU 112₁. As depicted in Fig. 2(b), the signal output by the laser diode 120₁ is at a wavelength λ₁ and is passed from the output of the laser diode 120₁ via the coupler 122 and the fiber 108 to the OLT-side port 116 of the AWG 114 of the node 104. The AWG 114 causes the signal received at port 116 at the wavelength λ₁ to be forwarded to the ONU-side port 118₁ associated with the first ONU 112₁ so that the signal at the wavelength λ₁ is coupled via the AWG 114 and the line 106₁ to the ONU 112₁ where the optical signal is received and demodulated for obtaining the downlink data 124₁ for further processing.

When it is desired to transmit data to other ONUs the respective laser diodes associated with the ONUs are provided with the respective downlink data, as depicted in Fig. 2(c). As can be seen, the respective laser diodes 120₁ to 120₃ operate at different wavelengths λ₁ to λ₃ at which the ONUs 112₁ to 112₃ are capable of receiving and demodulating signals. Via the couple 122, the fiber 108 and the AWG 114, in the above described way, the respective signals are transmitted to the ONUs.

Thus, the WDM PON hardware architecture offers a point-to-point link between the OLT 102 and the respective ONUs 112₁ to 112_{N}. It is noted that for transmitting data in the uplink direction, i.e., from the ONUs to the OLT 102, the system basically operates in the same way. The respective ONUs 112₁ to 112₆ also comprise laser diodes operating at respective wavelengths and the OLT comprises respective photo detectors for receiving signals from the different units 102₂ to 102₆.

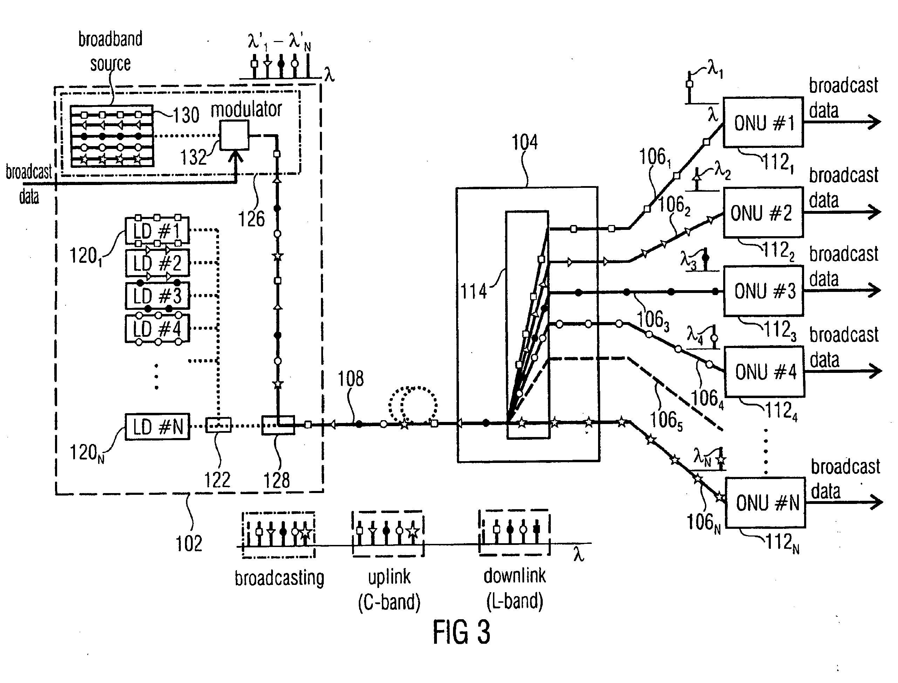

The architecture shown in Fig. 2 with some minor modification also allows for implementing a broadcasting functionality, as will be described with regard to Fig. 3. When compared to Fig. 2, the OLT 102 further comprises a broadcasting block 126 and a further optical coupler 128 for coupling the signals output by the broadcasting block 126 into the fiber 108. The broadcasting block 126 comprises a broadband optical source 130, for example a light emitting diode, covering a wavelength range λ'₁ to λ'₆ outside the uplink and downlink wavelength ranges indicated in Fig. 3 at the bottom. The respective ONUs 112₁ to 112_{N} comprise a photo detector capable of receiving an optical signal at one of the wavelengths provided by the source 130. The broadcasting block 126 further comprises a modulator 132 for modulating the output signal of the LED 130 with broadcast data to be transmitted to all ONUs 112₁ to 112_{N}. The modulated signal output from the block 126 is coupled via the passive optical coupler 128 into the fiber 108 and is distributed via the AWG 114 to each of the ONUs 112₁ to 112_{N} which demodulates the signal for obtaining the broadcast data for further processing. The broad spectrum optical source 130 covers the entire wavelengths that WDM-PON uses so that it is possible to send one broadcasting data to all ONUs that belong to the OLT. In order to avoid a collision between the broadcasting wavelength and the uplink and downlink wavelengths different wavelength bands may be used with a wavelength separation, wherein the wavelength separation from the uplink and downlink wavelength bands may correspond to the free spectral range (periodicity - FSR) of the AWG 114. In this case, each ONU comprises another photo detector together with a wavelength demultiplexer. This architecture provides not only for a very simple way to realize broadcasting in a WD-PON but also provides for the possibility to increase the downlink total capacity by including the broadcast channel as well as the original downlink channel.

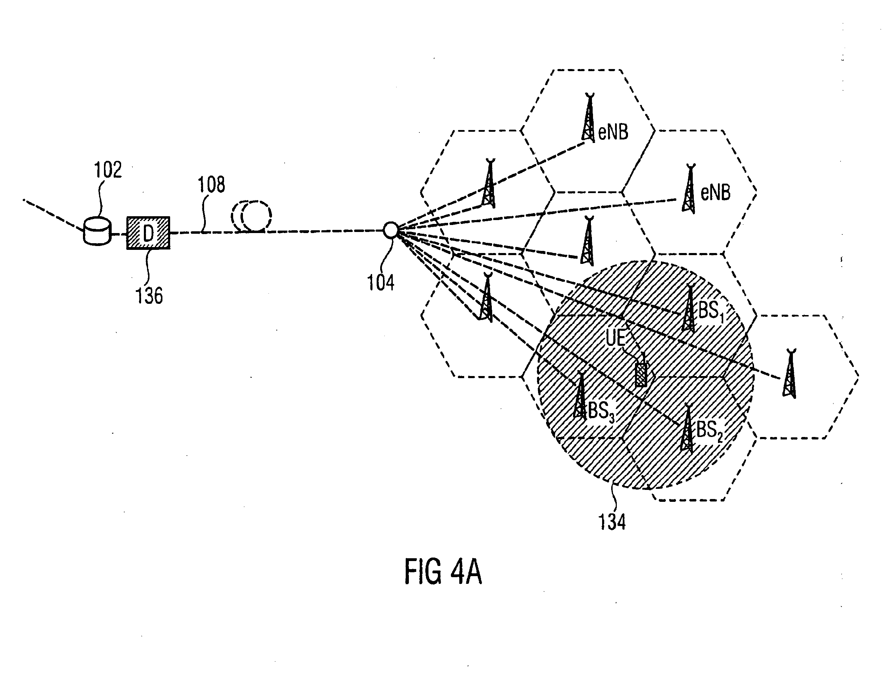

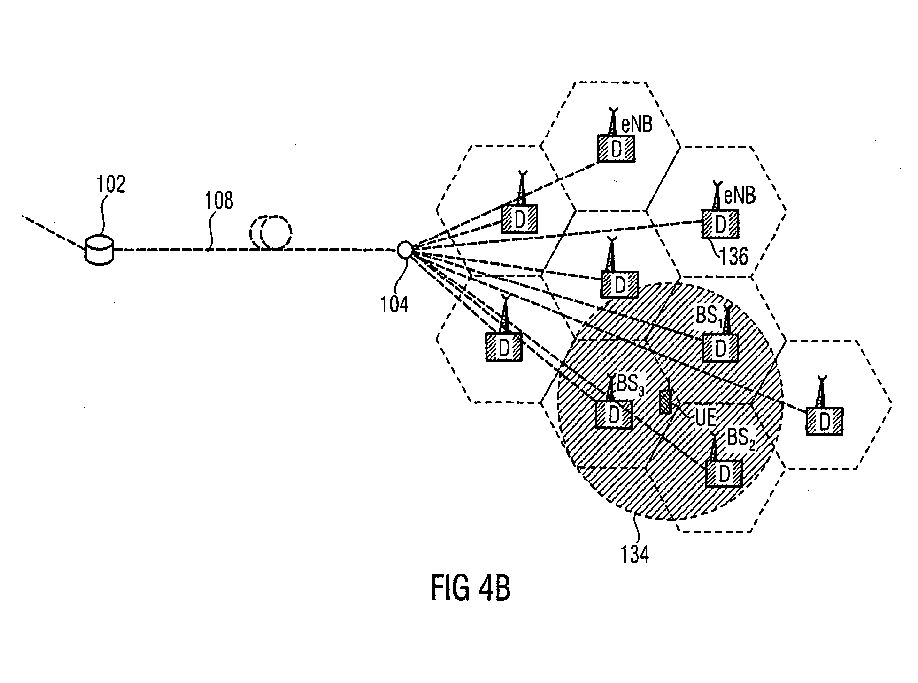

Thus, the approach according to Fig. 3 is fine for broadcasting data to all base stations of a network coupled to the OLT 102, however, this is not always needed, for example when considering a situation as depicted in Fig. 1, when a user equipment is served by two or more base stations. Fig. 4(a) shows a schematic representation of a network similar to the one in Fig. 1. A user equipment UE is within the range 134 of base stations BS₁ to BS₃ connected to the OLT 102. At the OLT 102 a data block 136 is provided which needs to be delivered to the base stations serving user equipment UE, namely base stations BS₁ to BS₃. Applying the functionality as described with regard to Fig. 3 results in a distribution of the data block 136 not only to base stations BS₁ to BS₃ but also to all other base stations in the network as depicted in Fig. 4(b), so that broadcasting delivers data to base stations which do not need it.

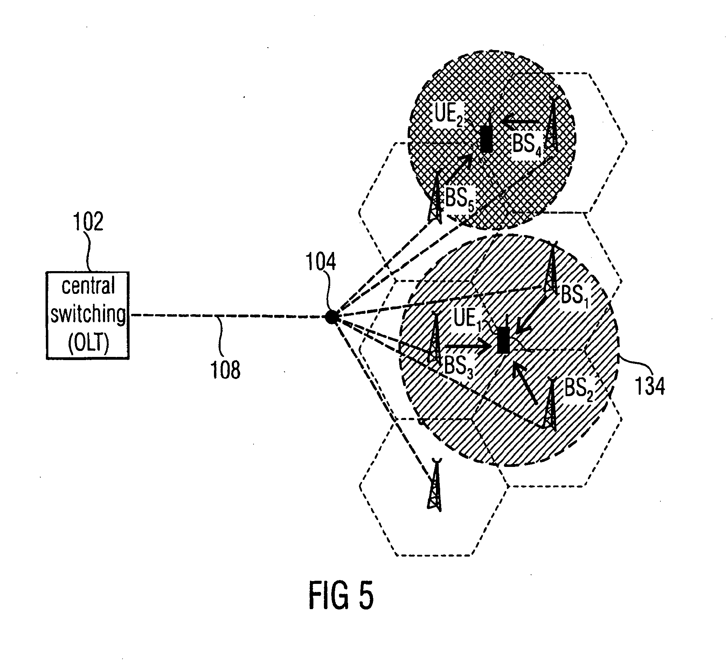

Thus, the broadcasting approach discussed above is useful to provide cable TV or broadcasting services to FTTH subscribers, however, it inherently has a limitation of use in mobile applications, namely the lack of multicasting capability. As described with regard to Fig. 4, for CoMP applications (see for example Fig. 1), not every base station joins CoMP, meaning the number of cooperative base stations is usually limited, wherein the actual number depends on several radio and network parameters. Moreover, as it shown in Fig. 5, it is likely to have a different cooperative group of base stations serving a different user equipment simultaneously in one PON system. More specifically, as shown in Fig. 5, user station UE₁ is served by base stations BS₁ to BS₃ as indicated by the arrows and the circle 134. A further base station UE₂ is present and is served, for example, only by base stations BS₄ and BS₅. Thus, the first group of base stations BS₁ to BS₃ serving user equipment UE₁ may require different information than the second group of base stations BS₄ and BS₅ serving user equipment UE₂. Thus, to provide different multicasting data to the different groups of base stations, a multicasting capability is required, not a broadcasting capability.

Jung-Hyung Moon et al: "Overlay of Broadcasting Signal in a WDM-PON", Optical Fiber Communication Conference and National Fibers Optic Engineers Conference, 1.1.2006, describe a WDM-PON including an optical multiplexer/demultiplexer according to the preamble of claim 1.

It is an object of the present invention to provide a novel WDM-PON architecture having L1 multicasting capabilities.

This object is achieved by an optical multiplexer/demultiplexer device according to claim 1, a central node according to claim 6, a wireless communication system according to claim 11 and a method according to claim 13.

Embodiments of the invention provide a central node for a communication system having a plurality of nodes coupled to the central node by a passive optical network, the central node comprising:
an output port adapted to be coupled to the passive optical network; and
a multiplexer/demultiplexer device having a plurality of outputs coupled to the output port,
wherein the multiplexer/demultiplexer device is adapted to multiplex optical signals from a plurality of optical sources to one of the plurality of outputs, and to demultiplex an optical signal from a broad spectrum optical source to the plurality of outputs, and
wherein for transmitting data to a group of nodes of the communication system, the central node is adapted to selectively provide the data at the output port using the optical signals at the plurality of outputs of the multiplexer/demultiplexer device.

Embodiments of the invention provide a wireless communication system, comprising:
a plurality of nodes adapted to provide for a wireless communication with one or more wireless devices; and
at least one central node in accordance with embodiments of the invention,
wherein the at least one central node and one or more of the plurality of nodes are coupled by a passive optical network forming the backhaul link between the central node and the nodes.

Embodiments of the invention provide an optical multiplexer/demultiplexer device for a central node of a communication system having a plurality of nodes coupled to the central node by a passive optical network, the optical multiplexer/demultiplexer device comprising:
a plurality of inputs adapted to receive optical signals from a plurality of optical sources and an optical signal from a broad spectrum optical source;
a plurality of outputs, wherein the optical multiplexer/demultiplexer device is configured to multiplex the optical signals from the plurality of optical sources to one of the plurality of outputs, and wherein the optical multiplexer/demultiplexer device is configured to demultiplex the optical signal from the broad spectrum optical source into a plurality of optical signals having different wavelengths at the plurality of outputs;
a passive optical coupler adapted to couple the optical signals at the plurality of outputs to an output port; and
a plurality of devices coupled between respective ones of the plurality of outputs and the passive optical coupler, each of the plurality of devices being adapted to selectively provide data to be transmitted to a group of nodes to the optical coupler.

Embodiments of the invention provide a method for transmitting data to one or more groups of nodes in a communication system having a plurality of nodes coupled to a central node by a passive optical network, the method comprising:
generating at the central node a broad spectrum optical signal;
selecting from the broad spectrum optical signal the wavelengths of which correspond to the wavelength allocated to the nodes in the one or more group; and
providing the data to the respective nodes in the one or more groups over the passive optical network using the selected optical signals.

Embodiments of the invention provide a computer program product comprising instructions stored by a machine readable carrier for carrying out the method in accordance with embodiments of the invention when executing the instructions on a computer.

In accordance with an embodiment the central node may comprise an optical coupler adapted to couple optical signals at the plurality of outputs of the multiplexer/demultiplexer device to the output port, and a plurality of devices coupled between the respective outputs of the multiplexer/demultiplexer device and the optical coupler, each of the plurality of the devices being adapted to selectively provide data to be transmitted to a node of a group to the optical coupler.

In accordance with an embodiment the multiplexer/demultiplexer device is adapted to receive a modulated optical signal from the broad spectrum optical source, and to demultiplex the modulated optical signal to the plurality of outputs, the modulated optical signal comprising the data to be transmitted to a group of nodes in the communication system, and the central node is adapted to selectively couple the modulated optical signals to the output port.

In accordance with an embodiment the central node may comprise a broad spectrum optical source, a modulator having a first input coupled to an output of the broad spectrum optical source for receiving an unmodulated optical signal, a second input adapted to receive a modulation signal for modulating the optical signal with the data to be transmitted to the group of nodes, and an output coupled to the multiplexer/demultiplexer device and adapted to provide the modulated optical signal, and a plurality of optical switches, wherein an optical switch is provided between each of the plurality of outputs of the multiplexer/demultiplexer device and the output port, wherein the central node is adapted to control the plurality of optical switches such that only those modulated optical signals associated with the nodes in the group are forwarded to the output port.

In accordance with an embodiment the multiplexer/demultiplexer device is adapted to receive an unmodulated signal from the broad spectrum optical source, and to demultiplex the unmodulated signal to the plurality of outputs, and the central node is adapted to modulate those unmodulated optical signals at the plurality of outputs, which are associated with the nodes in the group, wherein the optical signals are modulated to comprise the data to be transmitted to the group of nodes. For transmitting first data to a first group of nodes and second data to a second group of nodes, the central node may be adapted to modulate a first set of optical signals at the plurality of outputs and associated with the nodes of the first group to comprise the first data, and to modulate a second set of optical signals at the plurality of outputs and associated with the nodes of the second group to comprise the second data.

In accordance with an embodiment the central node may further comprise a broad spectrum optical source coupled to the multiplexer/demultiplexer device for providing an unmodulated optical signal, and a plurality of modulators, wherein a modulator is provided between each of the plurality of outputs of the multiplexer/demultiplexer device and the output port, wherein the central node is adapted to selectively control the plurality of modulators to selectively modulate respective optical signals at the plurality of outputs to comprise data to be transmitted to one or more groups of nodes in the communication system.

In accordance with an embodiment each of the nodes in the communication system has allocated a different wavelength in the broad spectrum provided by the broad spectrum optical source and is adapted to detect an optical signal at the allocated wavelength, and wherein the multiplexer/demultiplexer device is adapted to demultiplex the optical signal received from the broad spectrum optical source into a plurality of optical signals, the demultiplexed optical signals having respective wavelengths corresponding to the wavelengths allocated to the respective nodes.

In accordance with an embodiment the central node further comprises a plurality of optical sources adapted to provide respective optical signals at respective optical wavelengths allocated to the respective nodes in a communication system, wherein the multiplexer/demultiplexer device comprises a plurality of inputs for receiving the optical signals from the plurality of optical sources, and wherein the multiplexer/demultiplexer device is adapted to receive the optical signal from the broad spectrum optical source at one of the inputs also receiving an optical signal from one of the plurality of the optical sources, or to receive the optical signal from the broad spectrum optical source at an additional input.

In accordance with an embodiment the multiplexer/demultiplexer device comprises an arrayed waveguide grating; the broad spectrum optical sources comprises a light emitting diode, and the optical sources comprise respective laser devices.

In accordance with an embodiment the method wherein selecting comprises modulating only those optical signals to comprise the data which have wavelengths allocated to the nodes of the one or more groups, or providing a modulated broad spectrum optical signal and forwarding only those wavelengths which correspond to the wavelengths allocated to the nodes in the group.

Embodiments of the invention suggest a WDM-PON architecture having a L1 multicasting functionality. For a mobile backhaul radio access network supporting the LTE-Advanced standard and standards beyond, wavelength division multiplexing passive optical networks (WDM-PON) systems have been considered due to their capacity to offer a large link capacity. Such systems provide each local node with a dedicated optical wavelength which allows for a virtual point-to-point link between a central node and a local node. This allows to provide a multi Gbps backhaul link capacity to each base station whose bandwidth requirement is more than one Gbps. Because of this point-to-point link characteristic, it is difficult to realize physical layer (L1) multicasting on top of the WDM-PONs. In addition to the delivering broadcasting services, a mobile cellular network also includes applications that need multicasting, for example a coordinated multipoint (CoMP) system which needs multicasting, transmission to only specific base stations that have joined the CoMP. In accordance with the inventive approach, different multicasting data can be provided to different groups of base stations allowing for a more efficient use of network resources when compared to broadcasting. In accordance with embodiments, a broad spectrum optical source is used together with multiple optical modulators or switches for multicasting the signal transmission. Apart from the above mentioned components, the WDM-PON architecture in accordance with embodiments corresponds to the conventional architecture, so that in accordance with the inventive approach a cost-effective solution for multicasting over WDM-PON is provided.

Embodiments of the invention are advantageous as they allow for providing a desired multicasting functionality. While broadcasting offers transmitting the same data to all optical network units without intelligence to selectively choose optical network units which actually need such broadcasting signals, multicasting enables to transmit data to only those optical network units which need the signals resulting in a more efficient use of the backhaul network. In addition, it is possible to provide multiple multicasting groups with the different multicasting data, and this is particularly useful in CoMP applications. Compared with IP multicasting, L1 multicasting in accordance with the inventive approach in the physical layer enables single-copy multicasting, which will not increase the network overhead as IP multicasting does.

A further advantage of the inventive approach is that an additional flexibility in the downlink channel capacity is generated. An additional wavelength band for multicasting optical channels is provided which is separated from the downlink data channel in the WDM-PON system. Thus, when there is a need to have a larger downlink capacity, for example for specific CoMP applications, the multicasting channel may be used to increase also the downlink capacity. This allows for a reconfiguration capability of backhaul networks which, in turn, allows to control/manage backhaul networks more efficiently.

Embodiments of the present invention will now be described with regard to the accompanying drawings, in which:
- Fig. 1: depicts a schematic representation of a section of a wireless communication network used for implementing a coordinated multi-point system using mobile backhaul networks;
- Fig. 2: describes the architecture and functionality of a WDM-PON hardware, wherein Fig. 2(a) is a schematic representation of the hardware architecture, and where-in Fig. 2(b) and Fig. 2(c) describe the functionality of the architecture of Fig. 2(a) in further detail;
- Fig. 3: depicts an architecture similar to the one shown in Fig. 2 with some minor modification for implementing a broadcasting functionality;
- Fig. 4: shows a schematic representation of a network similar to the one in Fig. 1, wherein Fig. 4(a) shows a data block for delivery to a group of base stations at the OLT, and wherein Fig. 4(b) shows that applying the functionality as described with regard to Fig. 3 results in a distribution of the data block to all base stations in the network;
- Fig. 5: shows different cooperative groups of base stations serving different user equipments simultaneously in one PON system;
- Fig. 6: shows a WDM-PON architecture having multicasting capabilities in accordance with an embodiment of the invention;
- Fig. 7: shows a WDM-PON architecture in accordance with another embodiment of the invention having multicasting capabilities that allow to have different multicasting groups in a PON;
- Fig. 8: shows the architecture depicted in Fig. 7 allowing to selectively modulate multicasting data, wherein Fig. 8(a) shows multicasting data only to one group, and wherein Fig. 8(b) shows multicasting different data to different groups;
- Fig. 9: shows a WDM-PON architecture in accordance with yet another embodiment of the invention providing for multicasting capabilities that allow one multicasting group in a PON;
- Fig. 10: shows the effects of multicasting data in accordance with embodiments of the invention, wherein Fig. 10(a) shows a schematic view of a wireless communication network having base stations serving different user equipments, and wherein Fig. 10(b) shows that data blocks are forwarded only to the base stations which need the data; and
- Fig. 11: shows an evaluation of how multicasting can enhance the network MIMO plus the feasibility.

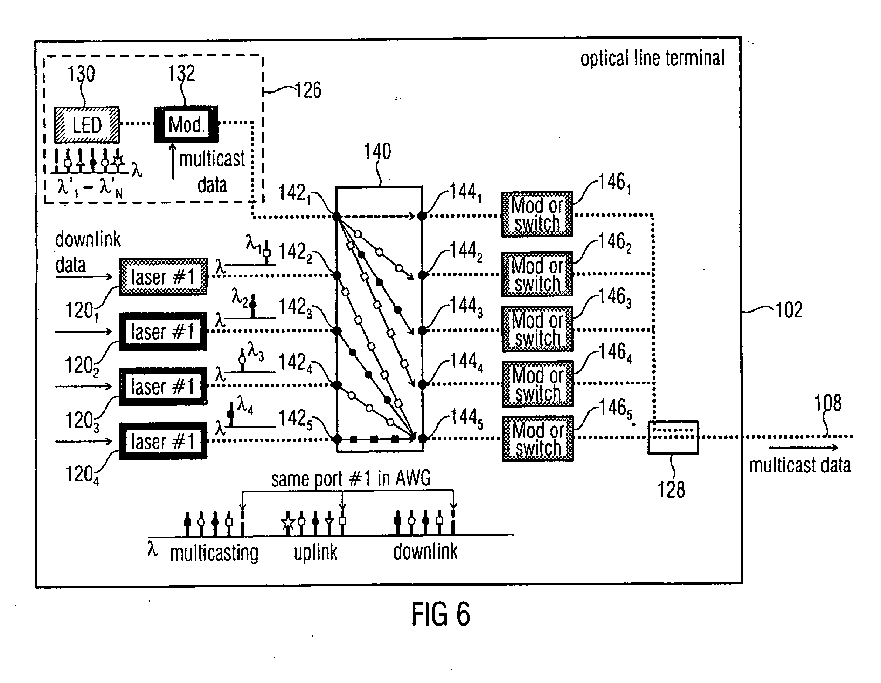

Fig. 6 shows a WDM-PON architecture having multicasting capabilities in accordance with an embodiment of the invention. In Fig. 6 only the optical line terminal 102 is depicted; those elements that have been described already with regard to the preceding figures are associated with the same reference number and will not be described again. In Fig. 6 only the OLT 102 coupled to the fiber 108 is shown as the rest of the system remains unchanged. As can be seen from a comparison of Figs. 3 and 6, the OLT 102 comprises the plurality of laser diodes 120₁ to 120₄ and also the block 126 comprising the broad spectrum optical source 130, for example a LED and the modulator 132. In addition to the arrangement depicted with regard to Fig. 3, the architecture in accordance with the embodiment of Fig. 6 comprises an NxN arrayed wave guide grating (AWG) 140 having a plurality of input ports 142₁ to 142₅ and a plurality of output ports 144₁ to 144₅. The output of the laser diodes 120₁ to 120₄ are coupled to the respective input ports 142₂ to 142₅ wherein the AWG 140 is configured to apply the signals at the input ports 142₂ to 142₅ to a common output port 144₅. The output of the block 126 is coupled to the input port 142₁ and the AWG 140 is configured to distribute wavelengths of the broadband signal to the respective output ports 144₁ to 144₅. The OLT 102 in addition comprises a plurality of modulators or switches 146₁ to 146₅ having an input coupled to the respective output ports 144₁ to 144₅ of the AWG 140 and having the output coupled to the passive optical coupler 128 which, in turn, is coupled to the fiber 108.

The components used in the architecture in accordance with the embodiment of Fig. 6 are commercially available and fully compliant with conventional WDM-PON systems, so that the embodiment according to Fig. 6 allows for a cost-effective solution. The basic idea of the approach in accordance with the embodiment of Fig. 6 is to use a different arrayed wave guide grating when compared to prior art approaches and to provide the additional modulators/switches. More specifically, in accordance with the inventive approach as depicted in the embodiment of Fig 6, instead of using a Nx 1 arrayed wave guide grating as is used in Fig. 3 for coupling the signals from the laser diodes (N inputs) to a common output (1 output), a NxN AWG 140 (N inputs - N outputs) is used to separate the different wavelengths from the broad spectrum optical source 130, for example the LED. Further, the modulators/switches 146₁ to 146₄ are provided for each wavelength at the output of the NxN AWG 140. In a similar way as the broadcasting approach described above, the inventive approach utilizes the LED 130 to generate broad spectrum optical signals having a wavelength λ'₁ to λ'₄ which are at a different band when compared to the wavelength of the optical signal for the downlink so that the wavelength ranges are separated by the FSR of the AWG 140. By means of the AWG characteristics, the broad spectrum optical signals are spatially separated at the output of the AWG 140 according to their wavelength. The AWG 140 will also be used for multiplexing and demultiplexing downlink/uplink optical signals exchanged between the OLT 102 and the respective ONUs. At each output of the AWG 140 the optical modulator or switch 146₁ to 146₅ is provided, and the outputs are combined to a main downlink port by using the passive optical coupler 128.

As shall be described in further detail below, the use of optical modulators enables to apply different multicasting data into different wavelengths allocated with different ONUs, while a simpler approach uses only optical switches instead of the modulators to simply block transmissions to ONUs that do not need to get multicasting data.

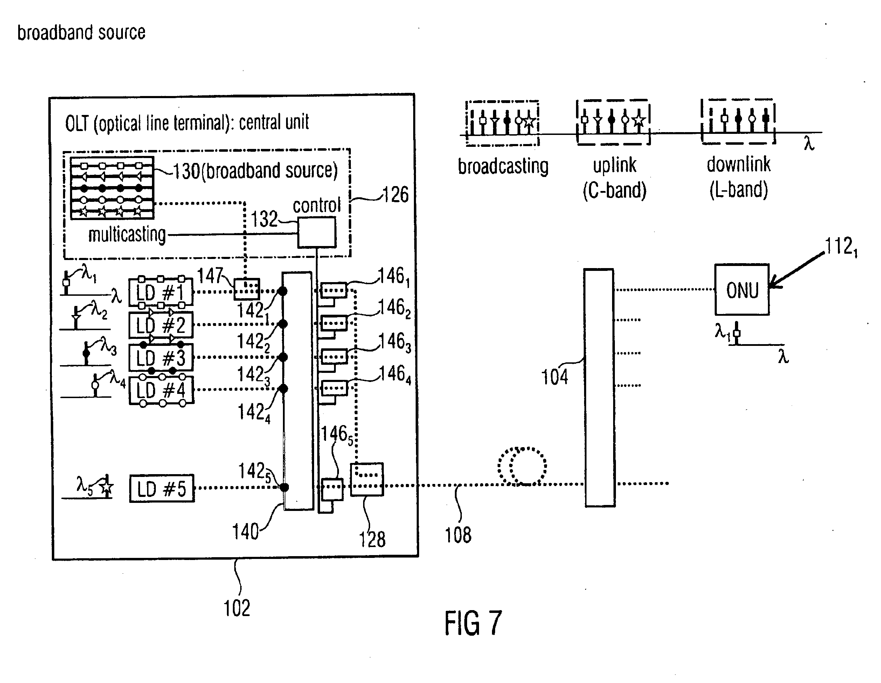

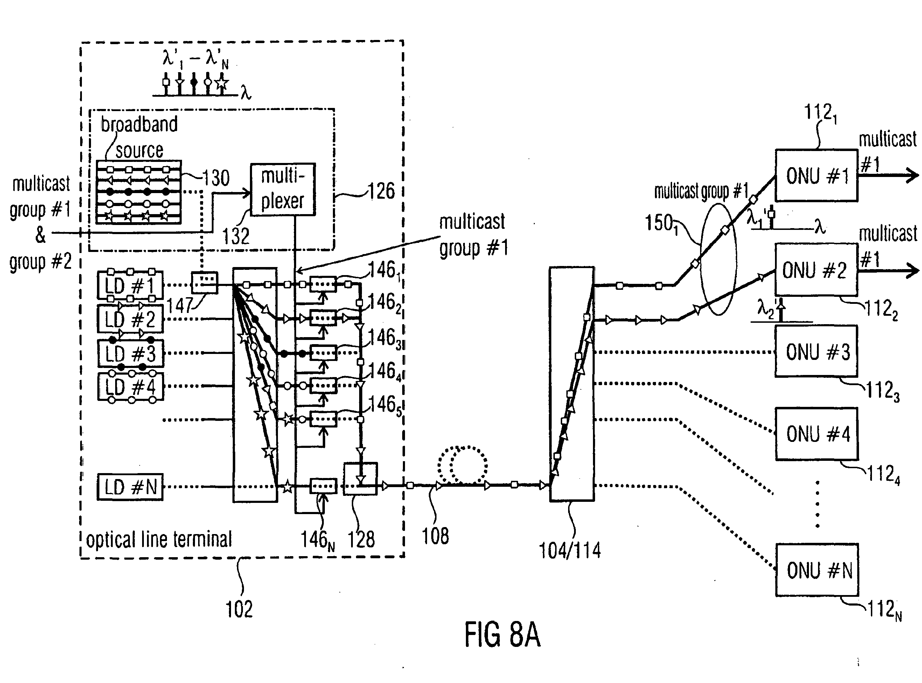

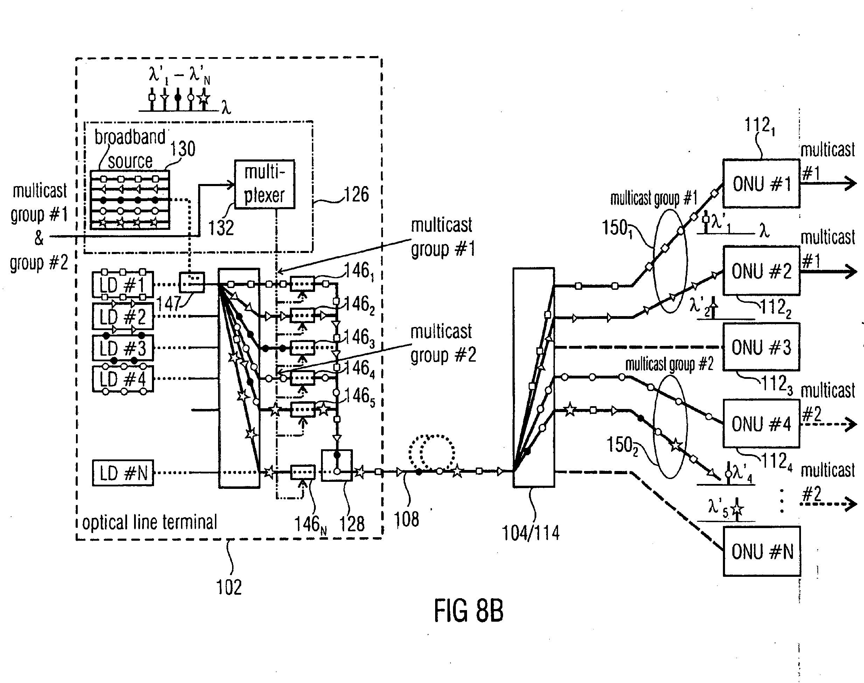

Fig. 7 shows a WDM-PON architecture in accordance with another embodiment of the invention having multicasting capabilities that allow to have different multicasting groups in a PON similar to Fig. 6 except that elements 146₁ to 146₅ are respective modulators, and element 132 is a control block. Also the AWG is slightly different in that it comprises a number of inputs 142₁ to 142₅ and outputs 144₁ to 144₅ corresponding the number of laser diodes 120₁ to 120₅ (in Fig. 7 there are five inputs and five outputs). The signal from the multicast block 126 is coupled via the coupler 147 into the first input 142₁ also used for the signals from the first laser diode 120₁. The multicasting block 126 comprises the broad spectrum optical source 130 and the control block 132 receiving the multicasting data. The output of the control block 132 is connected to the plurality of modulators 146₁ to 146₅ coupled to the output ports of the AWG 140. The architecture depicted in Fig. 7 makes it possible to selectively modulate different multicasting data into different ONUs. This is described in further detail with regard to Fig. 8. In Fig. 8(a) a situation is assumed in accordance with which multicast data is to be transmitted only to ONUs 112₁ and 112₂. The respective data is provided to the control block or multiplexer 132 of the multicasting block of the OLT 102. The signal received at the multiplexer 132 indicates that the signals are desired to be forwarded to the group comprising the ONUs 112₁ and 112₂ so that the data provided is forwarded by block 132 only to the optical modulators 146₁ and 146₂. The signals at wavelengths λ'₁ and λ'₂ provided by the broad LED 130 are modulated with the multicast data, while the remaining signals at the optical wavelengths λ'₃ to λ'_{N} are not modulated. Thus, only ONUs 112₁ and 112₂ receive the optical signals from the LED 130 at wavelengths with the multicast data is modulated thereto so that the respective multicast data is output for further transmission by the ONUs 112₁ and 112₂. The remaining ONUs do not receive modulated signals so that no signals are derived.

Fig. 8(b) shows a similar approach as in Fig. 8(a) except that different multicast data is to be transmitted to different sets of ONUs. More specifically, at the multiplexer 132 of the multicast block 126 of the OLT 102 respective multicast data for two groups are received indicating to the multiplexer 132 which of the ONUs is part of the respective groups. On the basis of this information the multiplexer 132 forwards the data for the multicast group #1 to the optical modulators 146₁ and 146₂, and the multicast data for group #2 to the optical modulators 146₄ and 146₅. Thus, the signals at wavelengths λ'₁ and λ'₂ are modulated with the data for the multicast group 1, and the signals at wavelengths λ'₄ and λ'₅ are modulated with the multicast data for group 2. The signals are transmitted to the ONUs as described above with regard to the broadcasting approach, however only the ONUs 112₁ and 112₂ as well as the ONUs 112₄, 112₅ receive modulated signals at the just mentioned wavelengths and therefore receive the multicast data for group #1 (see reference sign 150₁) and for group #2 (see reference sign 150₂). The remaining ONUs 112₃ and 112₆ receive no optical signal by blocking transmission in modulators, and therefore provide no data at their output.

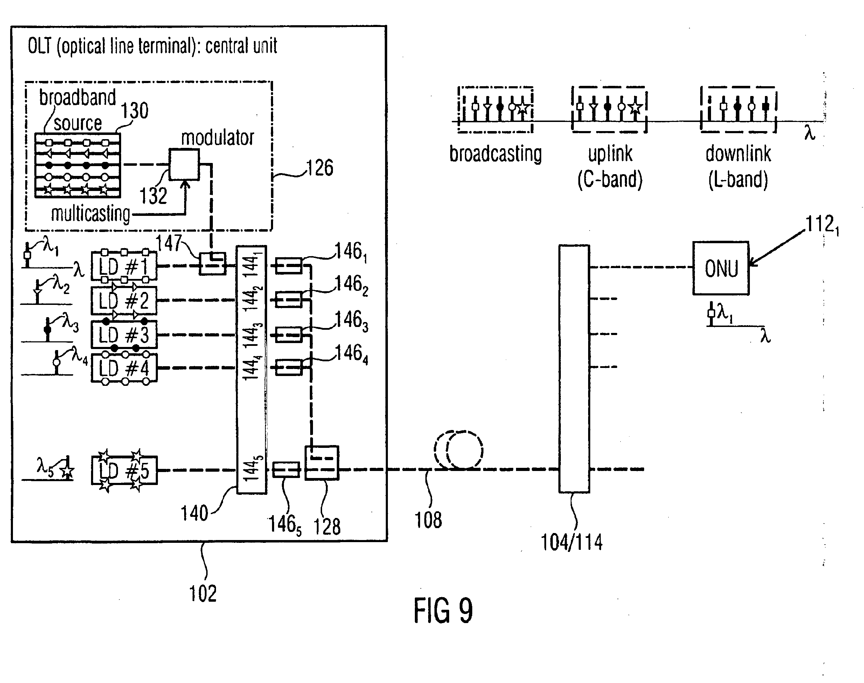

Fig. 9 shows a WDM-PON architecture in accordance with yet another embodiment of the invention providing for multicasting capabilities that allow one multicasting group in a PON. The structure of the OLT 102 corresponds to the structure described with regard to Fig. 7 except that the elements 146₁ to 146₅ are optical switches. In accordance with the embodiment depicted in Fig. 9, multicasting data may be submitted to one or more of the ONUs 112₁ to 112₆. For example, when it is desired to multicast data only to ONUs 112₁ and 112₂ the desired multicasting data is modulated onto the output signal of the LED 130 using the modulator 132 and, via the AWG 140 this signal is supplied to the respective output ports 144₁ to 144₅. The optical switches are controlled dependent on which of the ONUs is to receive the multicast data. For example, when only ONUs 112₁ and 112₃ should receive the multicast data, optical switches 146₁ and 146₃ are activated to allow the signals output from the AWG 140 to pass, thereby only providing signals with the wavelength λ'₁ and λ'₃ which are detected by the ONUs 112₁ and 112₃. The other ONUs do not receive signals at the wavelengths allocated with them for receiving multicast data. Thus, Fig. 9 describes an embodiment of WDM-PON architecture with multicasting functionality limited to only one group in the WDM-PON. The broad spectrum optical source 130, like a LED, is used and modulated with a multicasting data by using an external modulator 132, for example an electro absorption modulator. The modulated optical signals are fed into the first port of the NxN passive wavelength router (e.g. an AWG) 140 which is originally used for multiplexing and demultiplexing of downlink and uplink optical signals. The multicasting optical signals having the broad spectrum are spatially separated at the outputs of the AWG 140. A multicasting transmission is blocked by the optical switches for those ONUs which do not need multicasting data.

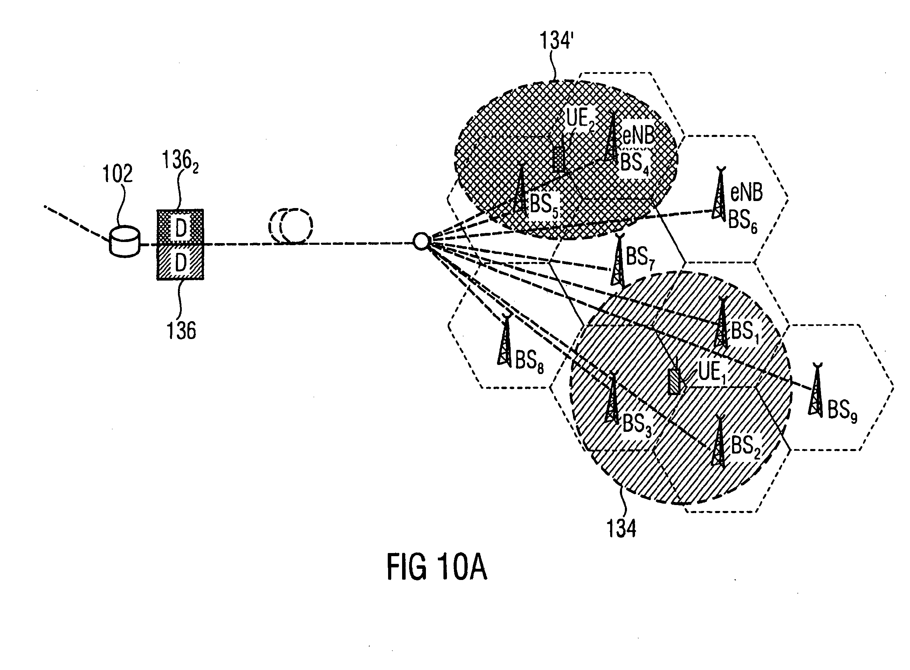

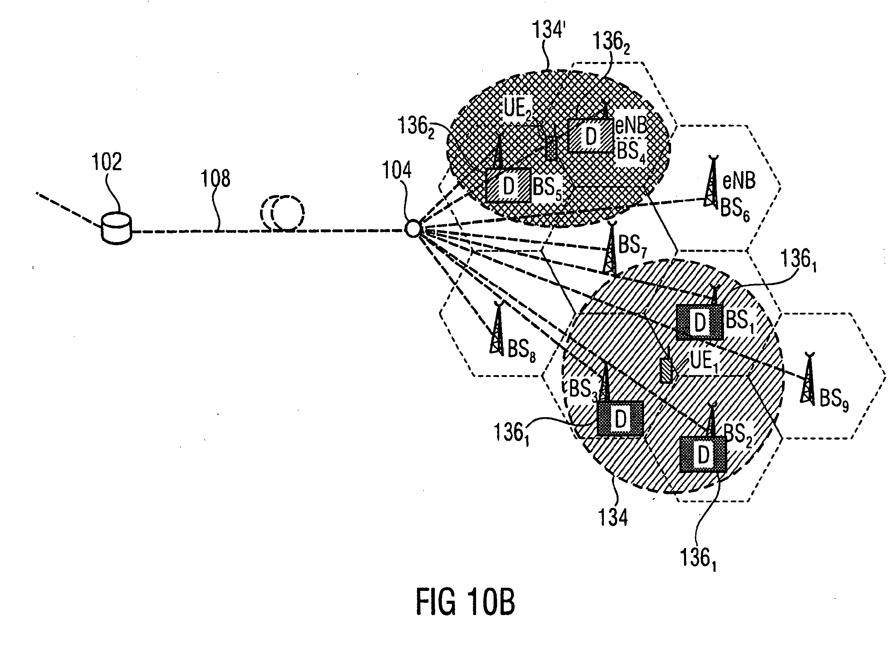

The effects of multicasting data will be described with regard to Fig. 10 in which an OLT in accordance with Fig. 7 is assumed, i.e. an OLT allowing to have different multicasting groups in a PON. Fig. 10(a) shows a situation similar to Fig. 4 and Fig. 5. More specifically, Fig. 10(a) shows a schematic view of a wireless communication network having a plurality of cells with respective base stations. It is assumed that a first user equipment UE₁ is served by base stations BS₁ to BS₃ as depicted by circle 134. A second user equipment UE₂ is served by base stations BS₄ and BS₅ as depicted by circle 134'. It is assumed that the system uses CoMP for serving the user equipments by different base stations. The base stations BS₁ and BS₅ are connected via the WDM-PON to the OLT 102 at which respective multicast data blocks 136₁ and 136₂ are provided for transmission to the respective user equipments. Block 136₁ is associated with user equipment UE₁ and block 136₂ is associated with user equipment UE₂.

Applying the inventive approach in accordance with the embodiment of Figs. 7 and 8, a situation as shown in Fig. 10(b) is achieved in which the respective data blocks 136₁ and 136₂ are forwarded only to the base stations of groups 134 and 134', respectively. To be more specific, base stations BS₁ to BS₃ receive the data block 136₁ while the base stations BS₄ and BS₅ receive the data block 136₂. Base stations BS₆ to BS₉ do not receive any data blocks. Thus, Fig. 10 depicts the efficiency of the inventive approach for multicasting data to different groups in a WDM-PON system.

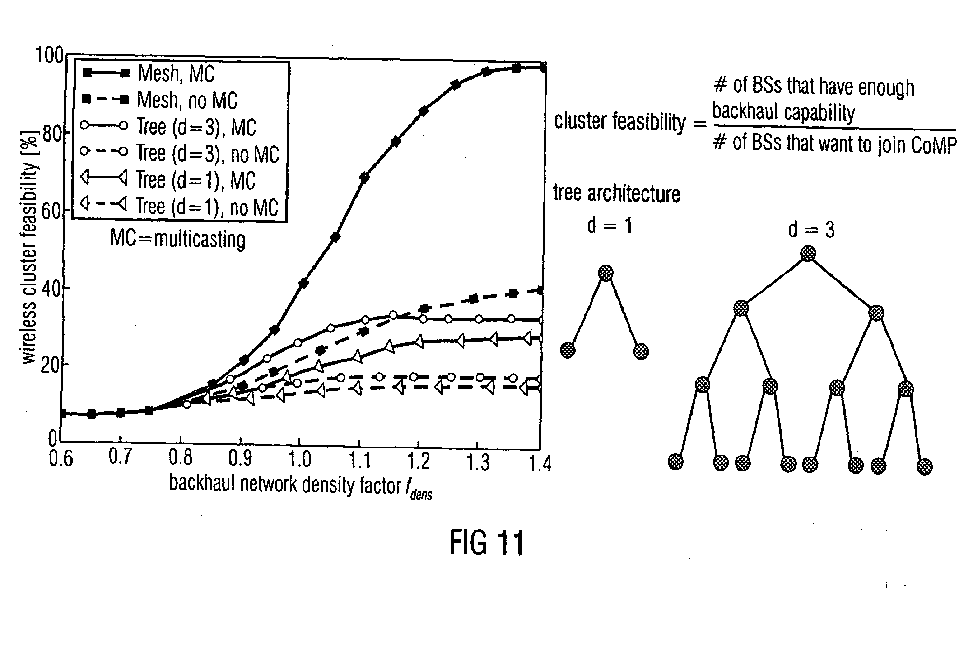

Fig. 11 shows an evaluation of how multicasting can enhance the network MIMO plus the feasibility. Fig. 11 shows that multicasting increases the cluster feasibility of network MI-MO, which in turn results in an improved user throughput.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Depending on certain implementation requirements, embodiments of the invention can be implemented in hardware or in software. The implementation can be performed using a digital storage medium, for example a floppy disk, a DVD, a CD, a ROM, a PROM, an EPROM, an EEPROM or a FLASH memory, having electronically readable control signals stored thereon, which cooperate (or are capable of cooperating) with a programmable computer system such that the respective method is performed. Some embodiments according to the invention comprise a data carrier having electronically readable control signals, which are capable of cooperating with a programmable computer system, such that one of the methods described herein is performed. Generally, embodiments of the present invention can be implemented as a computer program product with a program code, the program code being operative for performing one of the methods when the computer program product runs on a computer. The program code may for example be stored on a machine readable carrier. Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer. A further embodiment of the inventive methods is, therefore, a data carrier (or a digital storage medium, or a computer-readable medium) comprising, recorded thereon, the computer program for performing one of the methods described herein. A further embodiment of the inventive method is, therefore, a data stream or a sequence of signals representing the computer program for performing one of the methods described herein. The data stream or the sequence of signals may for example be configured to be transferred via a data communication connection, for example via the Internet. A further embodiment comprises a processing means, for example a computer, or a programmable logic device, configured to or adapted to perform one of the methods described herein. A further embodiment comprises a computer having installed thereon the computer program for performing one of the methods described herein.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

## Claims

1. An optical multiplexer/demultiplexer device (140) for a central node (102) of a communication system (100) having a plurality of nodes (BS₁-BS₉, 112₁-112_{N}) coupled to the central node (102) by a passive optical network (104, 106₁-106_{N}, 108), the optical multiplexer/demultiplexer device (140) comprising:
a plurality of inputs adapted to receive optical signals from a plurality of optical sources (120₁-120_{N}) and an optical signal from a broad spectrum optical source (130);
a plurality of outputs (144₁-144_{N}), wherein the optical multiplexer/demultiplexer device (140) is configured to multiplex the optical signals from the plurality of optical sources (120₁-120_{N}) to one of the plurality of outputs (144₅, 144_{N}); and
an optical coupler (128) adapted to couple the optical signals at the plurality of outputs (144₁-144_{N}) to an output port;
**characterized in that**
the optical multiplexer/demultiplexer device (140) is configured to demultiplex the optical signal from the broad spectrum optical source (130) into a plurality of optical signals having different wavelengths at the plurality of outputs (144₁-144_{N}), and
the optical multiplexer/demultiplexer device (140) comprises a plurality of devices (146₁-146_{N}) coupled between respective ones of the plurality of outputs (144₁-144_{N}) and the passive optical coupler (128), each of the plurality of devices (146₁-146_{N}) being adapted to selectively provide data to be transmitted to a group of nodes to the optical coupler (128).

2. The optical multiplexer/demultiplexer device (140) of claim 1, wherein the optical coupler (128) is a passive optical coupler (128).

3. The optical multiplexer/demultiplexer device (140) of claim 1 or 2, adapted to
receive a modulated optical signal from the broad spectrum optical source (130),
and to demultiplex the modulated optical signal to the plurality of outputs (144₁-144_{N}), the modulated optical signal comprising the data to be transmitted to a group of nodes (BS₁-BS₉, 112₁-112_{N}) in the communication system (100), and
to selectively couple the modulated optical signals to the output port by the plurality of devices (146₁-146_{N}).

4. The optical multiplexer/demultiplexer device (140) of claim 1 or 2, adapted to
receive an unmodulated signal from the broad spectrum optical source (130), and to demultiplex the unmodulated signal to the plurality of outputs (144₁-144_{N}), and modulate, by the plurality of devices (146₁-146_{N}), those unmodulated optical signals at the plurality of outputs (144₁-144_{N}), which are associated with the nodes (BS₁-BS₉, 112₁-112_{N}) in the group, wherein the optical signals are modulated to comprise the data to be transmitted to the group of nodes.

5. The optical multiplexer/demultiplexer device (140) of claim 4, wherein for transmitting first data to a first group of nodes and second data to a second group of nodes, the plurality of devices (146₁-146_{N}) are adapted to modulate a first set of optical signals at the plurality of outputs (144₁-144_{N}) and associated with the nodes of the first group to comprise the first data, and to modulate a second set of optical signals at the plurality of outputs (144₁-144_{N}) and associated with the nodes of the second group to comprise the second data.

6. A central node (102) for a communication system (100) having a plurality of nodes (BS₁-BS₉, 112₁-112_{N}) coupled to the central node (102) by a passive optical network (104, 106₁-106_{N}, 108), the central node (102) comprising:
an output port adapted to be coupled to the passive optical network (104, 106₁-106_{N}, 108); and
a multiplexer/demultiplexer device (140) according to one of claims 1 to 5,
wherein for transmitting data to a group of nodes (BS₁-BS₉, 112₁-112_{N}) of the communication system (100), the central node (102) is adapted to selectively provide the data at the output port using the optical signals at the plurality of outputs (144₁-144_{N}) of the multiplexer/demultiplexer device (140).

7. The central node (102) of claim 6 when referring back to one of claims 1 to 3, comprising:
a broad spectrum optical source (130); and
a modulator (132) having a first input coupled to an output of the broad spectrum optical source (130) for receiving an unmodulated optical signal, a second input adapted to receive a modulation signal for modulating the optical signal with the data to be transmitted to the group of nodes, and an output coupled to the multiplexer/demultiplexer device (140) and adapted to provide the modulated optical signal;
wherein the plurality of devices (146₁-146_{N}) of the multiplexer/demultiplexer device (140) comprises a plurality of optical switches (146₁-146_{N}), and
wherein the central node (102) is adapted to control the plurality of optical switches (146₁-146_{N}) such that only those modulated optical signals associated with the nodes in the group are forwarded to the output port.

8. The central node (102) of claim 6 when referring back to one of claims 1, 2, 4 or 5, comprising:
a broad spectrum optical source (130) coupled to the multiplexer/demultiplexer device (140) for providing an unmodulated optical signal;
wherein the plurality of devices (146₁-146_{N}) of the multiplexer/demultiplexer device (140) comprises a plurality of modulators (146₁-146_{N}), and
wherein the central node (102) is adapted to selectively control the plurality of modulators (146₁-146_{N}) to selectively modulate respective optical signals at the plurality of outputs (144₁-144_{N}) to comprise data to be transmitted to one or more groups of nodes in the communication system (100).

9. The central node (102) of one of claims 6 to 8, wherein each of the nodes (BS₁-BS₉, 112₁-112_{N}) in the communication system (100) has allocated a different wavelength in the broad spectrum provided by the broad spectrum optical source (130) and is adapted to detect an optical signal at the allocated wavelength, and wherein the multiplexer/demultiplexer device (140) is adapted to demultiplex the optical signal received from the broad spectrum optical source (130) into a plurality of optical signals, the demultiplexed optical signals having respective wavelengths corresponding to the wavelengths allocated to the respective nodes (BS₁-BS₉, 112₁-112_{N}).

10. The central node (102) of one of claims 6 to 9, comprising:
a plurality of optical sources (120₁-120_{N}) adapted to provide respective optical signals at respective optical wavelengths allocated to the respective nodes (BS₁-BS₉, 112₁-112_{N}) in a communication system (100),
wherein the multiplexer/demultiplexer device (140) comprises a plurality of inputs for receiving the optical signals from the plurality of optical sources (120₁-120_{N}),
and
wherein the multiplexer/demultiplexer device (140) is adapted to receive the optical signal from the broad spectrum optical source (130) at one of the inputs also receiving an optical signal from one of the plurality of the optical sources (120₁-120_{N}), or
to receive the optical signal from the broad spectrum optical source (130) at an additional input.

11. The central node (102) of one claims 6 to 10, wherein
the multiplexer/demultiplexer device (140) comprises an arrayed waveguide grating;
the broad spectrum optical source (130) comprises a light emitting diode, and the optical sources (120₁-120_{N}) comprise respective laser devices.

12. A wireless communication system (100), comprising:
a plurality of nodes (BS₁-BS₉, 112₁-112_{N}) adapted to provide for a wireless communication with one or more wireless devices; and
at least one central node (102) as defined in one of claims 6 to 11,
wherein the at least one central node (102) and one or more of the plurality of nodes (BS₁-BS₉, 112₁-112_{N}) are coupled by a passive optical network (104, 106₁-106_{N}, 108) forming the backhaul link between the central node (102) and the nodes (BS₁-BS₉, 112₁-112_{N}).

13. A method for transmitting data to one or more groups of nodes (BS₁-BS₉, 112₁-112_{N}) in a communication system (100) having a plurality of nodes (BS₁-BS₉, 112₁-112_{N}) coupled to a central node (102) by a passive optical network (104, 106₁-106_{N}, 108), the method comprising:
generating at the central node (102) a broad spectrum optical signal;
selecting, by a multiplexer/demultiplexer device (140) according to one of claims 1 to 5, from the broad spectrum optical signal those optical signals the wavelengths of which 15 correspond to the wavelength allocated to the nodes in the one or more groups, and
providing the data to the respective nodes in the one or more groups over the passive optical network (104, 106₁-106_{N}, 108) using the selected optical signals.

## Patentansprüche

1. Eine optische Multiplexer/Demultiplexer-Vorrichtung (140) für einen Zentralknoten (102) eines Kommunikationssystems (100) mit einer Mehrzahl von Knoten (BS₁ - BS₉, 112₁ - 112_{N}), die durch ein passives optisches Netz (104, 106₁ - 106_{N}, 108) mit dem Zentralknoten (104) gekoppelt sind, wobei die optische Multiplexer/Demulti-plexer-Vorrichtung (140) folgende Merkmale aufweist:
eine Mehrzahl von Eingängen, die angepasst sind, um optische Signale von einer Mehrzahl optischer Quellen (120₁ - 120_{N}) und ein optisches Signal von einer optischen Quelle mit breitem Spektrum (130) zu empfangen;
eine Mehrzahl von Ausgängen (144₁ - 144_{N}), wobei die optische Multiplexer/Demultiplexer-Vorrichtung (140) ausgebildet ist, um die optischen Signale von der Mehrzahl optischer Quellen (120₁ - 120_{N}) an einen der Mehrzahl von Ausgängen (144₅, 144_{N}) zu multiplexen; und
einen optischen Koppler (128), der angepasst ist, um die optischen Signale an der Mehrzahl von Ausgängen (144₁ - 144_{N}) mit einem Ausgangstor zu koppeln;
**dadurch gekennzeichnet, dass**
die optische Multiplexer/Demultiplexer-Vorrichtung (140) ausgebildet ist, um das optische Signal von der optischen Quelle mit breitem Spektrum (130) in eine Mehrzahl optischer Signale mit unterschiedlichen Wellenlängen an der Mehrzahl von Ausgängen (144₁ - 144_{N}) zu demultiplexen, und
die optische Multiplexer/Demultiplexer-Vorrichtung (140) eine Mehrzahl von Vorrichtungen (146₁ - 146_{N}) aufweist, die zwischen jeweilige der Mehrzahl von Ausgängen (144₁ - 144_{N}) und den passiven optischen Koppler (128) geschaltet sind, wobei jede der Mehrzahl von Vorrichtungen (146₁ - 146_{N}) angepasst ist, um selektiv an eine Gruppe von Knoten zu übertragende Daten an den optischen Koppler (128) zu liefern.

2. Die optische Multiplexer/Demultiplexer-Vorrichtung (140) gemäß Anspruch 1, bei der der optische Koppler (128) ein passiver optischer Koppler (128) ist.

3. Die optische Multiplexer/Demultiplexer-Vorrichtung (140) gemäß Anspruch 1 oder 2, die angepasst ist, um
ein moduliertes optisches Signal von der optischen Quelle mit breitem Spektrum (130) zu empfangen und das modulierte optische Signal an die Mehrzahl von Ausgängen (144₁-144_{N}) zu demultiplexen, wobei das modulierte optische Signal die an eine Gruppe von Knoten (BS₁ - BS₉, 112₁ - 112_{N}) in dem Kommunikationssystem (100) zu übertragenden Daten aufweist, und
selektiv die modulierten optischen Signale durch die Mehrzahl von Vorrichtungen (146₁ - 146_{N}) mit dem Ausgangstor zu koppeln.

4. Die optische Multiplexer/Demultiplexer- Vorrichtung (140) gemäß Anspruch 1 oder 2, die angepasst ist, um
ein unmoduliertes Signal von der optischen Quelle mit breitem Spektrum (130) zu empfangen und das unmodulierte Signal an die Mehrzahl von Ausgängen (144₁ - 144_{N}) zu demultiplexen, und
durch die Mehrzahl von Vorrichtungen (146₁ - 146_{N}) diejenigen unmodulierten optischen Signale an der Mehrzahl von Ausgängen (144₁ - 144_{N}) zu modulieren, die den Knoten (BS₁ - BS₉, 112₁ - 112_{N}) in der Gruppe zugeordnet sind, wobei die optischen Signale moduliert sind, um die an die Gruppe von Knoten zu übertragenden Daten aufzuweisen.

5. Die optische Multiplexer/Demultiplexer-Vorrichtung (140) gemäß Anspruch 4, bei der zum Übertragen erster Daten an eine erste Gruppe von Knoten und zweiter Daten an eine zweite Gruppe von Knoten die Mehrzahl von Vorrichtungen (146₁ - 146_{N}) angepasst ist, um einen ersten Satz optischer Signale an der Mehrzahl von Ausgängen (144₁ - 144_{N}), und die den Knoten der ersten Gruppe zugeordnet sind, zu modulieren, um die ersten Daten aufzuweisen, und einen zweiten Satz optischer Signale an der Mehrzahl von Ausgängen (144₁ - 144_{N}), und die den Knoten der zweiten Gruppe zugeordnet sind, zu modulieren, um die zweiten Daten aufzuweisen.

6. Ein Zentralknoten (102) für ein Kommunikationssystem (100) mit einer Mehrzahl von Knoten (BS₁ - BS₉, 112₁ - 112_{N}), die durch ein passives optisches Netz (104, 106₁ - 106_{N}, 108) mit dem Zentralknoten (102) gekoppelt sind, wobei der Zentralknoten (102) folgende Merkmale aufweist:
ein Ausgangstor, das angepasst ist, um mit dem passiven optischen Netz (104, 106₁ - 106_{N}, 108) gekoppelt zu sein; und
eine Multiplexer/Demultiplexer-Vorrichtung (140) gemäß einem der Ansprüche 1 bis 5,
wobei zum Übertragen von Daten an eine Gruppe von Knoten (BS₁ - BS₉, 112₁ - 112_{N}) des Kommunikationssystems (100) der Zentralknoten (102) angepasst ist, um selektiv die Daten an dem Ausgangstor unter Verwendung der optischen Signale an der Mehrzahl von Ausgängen (144₁ - 144_{N}) der Multiplexer/Demultiplexer-Vorrichtung (140) bereitzustellen.

7. Der Zentralknoten (102) gemäß Anspruch 6 bei Rückbezug auf einen der Ansprüche 1 bis 3, der folgende Merkmale aufweist:
eine optische Quelle mit breitem Spektrum (130); und
einen Modulator (132) mit einem ersten Eingang, der mit einem Ausgang der optischen Quelle mit breitem Spektrum (130) gekoppelt ist, zum Empfangen eines unmodulierten optischen Signals, einem zweiten Eingang, der angepasst ist, um ein Modulationssignal zu empfangen, zum Modulieren des optischen Signals mit den an die Gruppe von Knoten zu übertragenden Daten, und einem Ausgang, der mit der Multiplexer/Demultiplexer-Vorrichtung (140) gekoppelt ist und angepasst ist, um das modulierte optische Signal bereitzustellen;
wobei die Mehrzahl von Vorrichtungen (146₁ - 146_{N}) der Multiplexer/Demultiplexer-Vornchtung (140) eine Mehrzahl optischer Schalter (146₁ - 146_{N}) aufweist,
und
wobei der Zentralknoten (102) angepasst ist, um die Mehrzahl optischer Schalter (146₁ - 146_{N}) derart zu steuern, dass nur diejenigen modulierten optischen Signale, die den Knoten in der Gruppe zugeordnet sind, an das Ausgangstor weitergeleitet werden.

8. Der Zentralknoten (102) gemäß Anspruch 6 bei Rückbezug auf einen der Ansprüche 1, 2, 4 oder 5, der folgendes Merkmal aufweist:
eine optische Quelle mit breitem Spektrum (130), die mit der Multiplexer/Demultiplexer-Vorrichtung (140) gekoppelt ist, zum Bereitstellen eines unmodulierten optischen Signals;
wobei die Mehrzahl von Vorrichtungen (146₁ - 146_{N}) der Multiplexer/Demultiplexer-Vorrichtung (140) eine Mehrzahl von Modulatoren (146₁ - 146_{N}) aufweist,
und
wobei der Zentralknoten (102) angepasst ist, um selektiv die Mehrzahl von Modulatoren (146₁ - 146_{N}) zu steuern, um selektiv jeweilige optische Signale an der Mehrzahl von Ausgängen (144₁ - 144_{N}) zu modulieren, um an eine oder mehrere Gruppen von Knoten in dem Kommunikationssystem (100) zu übertragende Daten aufzuweisen.

9. Der Zentralknoten (102) gemäß einem der Ansprüche 6 bis 8, bei dem jedem der Knoten (BS₁ - BS₉, 112₁ - 112_{N}) in dem Kommunikationssystem (100) eine unterschiedliche Wellenlänge in dem breiten Spektrum zugeteilt ist, das durch die optische Quelle mit breitem Spektrum (130) bereitgestellt wird, und jeder derselben angepasst ist, um ein optisches Signal bei der zugeteilten Wellenlänge zu erfassen, und bei dem die Multiplexer/Demultiplexer-Vorrichtung (140) angepasst ist, um das optische Signal, das von der optischen Quelle mit breitem Spektrum (130) empfangen wird, in eine Mehrzahl optischer Signale zu demultiplexen, wobei die optischen Demultiplex-Signale jeweilige Wellenlängen aufweisen, die den Wellenlängen entsprechen, die den jeweiligen Knoten (BS₁ - BS₉, 1121 - 112_{N}) zugeteilt sind.

10. Der Zentralknoten (102) gemäß einem der Ansprüche 6 bis 9, der folgende Merkmale aufweist:
eine Mehrzahl optischer Quellen (120₁ - 120_{N}), die angepasst sind, um jeweilige optische Signale mit jeweiligen optischen Wellenlängen, die den jeweiligen Knoten (BS₁ - BS₉, 112₁ - 112_{N}) in einem Kommunikationssystem (100) zugeteilt sind, bereitzustellen,
wobei die Multiplexer/Demultiplexer-Vorrichtung (140) eine Mehrzahl von Eingängen zum Empfangen der optischen Signale von der Mehrzahl optischer Quellen (120₁ - 120_{N}) aufweist, und
wobei die Multiplexer/Demultiplexer-Vorrichtung (140) angepasst ist, um das optische Signal von der optischen Quelle mit breitem Spektrum (130) an einem der Eingänge zu empfangen, der auch ein optisches Signal von einer der Mehrzahl optischer Quellen (120₁ - 120_{N}) empfängt, oder um das optische Signal an einem zusätzlichen Eingang von der optischen Quelle mit breitem Spektrum (130) zu empfangen.

11. Der Zentralknoten (102) gemäß einem der Ansprüche 6 bis 10, bei dem
die Multiplexer/Demultiplexer-Vorrichtung (140) ein als Array angeordnetes Wellenleitergitter aufweist;
die optische Quelle (130) mit breitem Spektrum eine Leuchtdiode aufweist, und
die optischen Quellen (120₁ - 120_{N}) jeweilige Laservorrichtungen aufweisen.

12. Ein drahtloses Kommunikationssystem (100), das folgende Merkmale aufweist:
eine Mehrzahl von Knoten (BS₁ - BS₉, 112₁ - 112_{N}), die angepasst sind, um für eine drahtlose Kommunikation mit einer oder mehreren drahtlosen Vorrichtungen zu sorgen; und
zumindest einen Zentralknoten (102), wie er in einem der Ansprüche 6 bis 11 definiert ist,
wobei der zumindest eine Zentralknoten (102) und einer oder mehrere der Mehrzahl von Knoten (BS₁ - BS₉, 112₁ - 112_{N}) durch ein passives optisches Netz (104, 106₁ - 106_{N}, 108) gekoppelt sind, das die Rücktransportverbindung zwischen dem Zentralknoten (102) und den Knoten (BS₁ - BS₉, 112₁ - 112_{N}) bildet.

13. Ein Verfahren zum Übertragen von Daten an eine oder mehrere Gruppen von Knoten (BS₁ - BS₉, 112₁ - 112_{N}) in einem Kommunikationssystem (100) mit einer Mehrzahl von Knoten (BS₁ - BS₉, 112₁ - 112_{N}), die durch ein passives optisches Netz (104, 106₁ - 106_{N}, 108) mit einem Zentralknoten (102) gekoppelt sind, wobei das Verfahren folgende Schritte aufweist:
Erzeugen eines optischen Signals mit breitem Spektrum an dem Zentralknoten (102);
Auswählen, durch eine Multiplexer/Demultiplexer-Vorrichtung (140) gemäß einem der Ansprüche 1 bis 5, derjenigen optischen Signale aus dem optischen Signal mit breitem Spektrum, deren Wellenlängen der Wellenlänge entsprechen, die den Knoten in der einen oder den mehreren Gruppen zugeteilt ist; und
Liefern der Daten unter Verwendung der ausgewählten optischen Signale über das passive optische Netz (104, 106₁ - 106_{N}, 108) an die jeweiligen Knoten in der einen oder den mehreren Gruppen.

## Revendications

1. Dispositif multiplexeur/démultiplexeur optique (140) pour un noeud central (102) d'un système de communication (100) présentant une pluralité de noeuds (B8₁-B8₉, 112₁-112_{N}) couplés au noeud central (102) par un réseau optique passif (104, 106₁-106_{N}, 108), le dispositif multiplexeur/démultiplexeur optique (140) comprenant:
une pluralité d'entrées adaptées pour recevoir des signaux optiques d'une pluralité de sources optiques (120₁-120_{N}) et un signal optique d'une source optique à large spectre (130);
une pluralité de sorties (144₁-144_{N}), où le dispositif multiplexeur/démultiplexeur optique (140) est configuré pour multiplexer les signaux optiques de la pluralité de sources optiques (120₁-120_{N}) à l'une de la pluralité de sorties (144₅, 144_{N});
et
un coupleur optique (128) adapté pour coupler les signaux optiques à la pluralité de sorties (144₁-144_{N}) à une porte de sortie;
**caractérisé par le fait que**
le dispositif multiplexeur/démultiplexeur optique (140) est configuré pour démultiplexer le signal optique de la source optique à large spectre (130) en une pluralité de signaux optiques ayant des longueurs d'ondes différentes à la pluralité de sorties (144₁-144_{N}), et
le dispositif multiplexeur/démultiplexeur optique (140) comprend une pluralité de dispositifs (146₁-146_{N}) couplés entre celles respectives de la pluralité de sorties (144₁-144_{N}) et le coupleur optique passif (128), chacun de la pluralité de dispositifs (146₁-146_{N}) étant adapté pour fournir de manière sélective les données à transmettre à un groupe de noeuds au coupleur optique(128).

2. Dispositif multiplexeur/démultiplexeur optique (140) selon la revendication 1, dans lequel le coupleur optique (128) est un coupleur optique passif (128).

3. Dispositif multiplexeur/démultiplexeur optique (140) selon la revendication 1 ou 2, adapté pour
recevoir un signal optique modulé de la source optique à large spectre (130), et pour démultiplexer le signal optique modulé vers la pluralité de sorties (144₁-144_{N}), le signal optique modulé comprenant les données à transmettre à un groupe de noeuds (BS₁-BS₉, 112₁-112_{N}) dans le système de communication (100), et pour coupler sélectivement les signaux optiques modulés à la porte de sortie par la pluralité de dispositifs (146₁-146_{N}).

4. Dispositif multiplexeur/démultiplexeur optique (140) selon la revendication 1 ou 2, adapté pour
recevoir un signal non modulé de la source optique à large spectre (130), et pour démultiplexer le signal non modulé vers la pluralité de sorties (144₁-144_{N}), et
par la pluralité de dispositifs (146₁-146_{N}), moduler les signaux optiques non modulés à la pluralité de sorties (144₁-144_{N}) qui sont associés aux noeuds (BS₁-BS₉, 112₁-112_{N}) dans le groupe, où les signaux optiques sont modulés pour comprendre les données à transmettre au groupe de noeuds.

5. Dispositif multiplexeur/démultiplexeur optique (140) selon la revendication 4, dans lequel, pour transmettre des premières données à un premier groupe de noeuds et des deuxièmes données à un deuxième groupe de noeuds, la pluralité de dispositifs (146₁-146_{N}) sont adaptés pour moduler un premier ensemble de signaux optiques à la pluralité de sorties (144₁-144_{N}) et associés aux noeuds du premier groupe, pour comprendre les premières données, et pour moduler un deuxième ensemble de signaux optiques à la pluralité de sorties (144₁-144_{N}) et associés aux noeuds du deuxième groupe, pour comprendre les deuxièmes données.

6. Noeud central (102) pour un système de communication (100) présentant une pluralité de noeuds (BS₁-BS₉, 112₁-112_{N}) couplés au noeud central (102) par un réseau optique passif (104, 106₁-106_{N}, 108). le noeud central (102) comprenant:
une porte de sortie adaptée pour être couplée au réseau optique passif (104, 106₁-106_{N}, 108); et
un dispositif multiplexeur/démultiplexeur (140) selon l'une des revendications 1 à 5,
dans lequel, pour transmettre des données à un groupe de noeuds (BS₁-BS₉, 112₁-112_{N}) du système de communication (100), le noeud central (102) est adapté pour fournir de manière sélective les données à la porte de sortie à l'aide des signaux optiques à la pluralité de sorties (144₁-144_{N}) du dispositif multiplexeur/ démultiplexeur (140).

7. Noeud central (102) selon la revendication 6 avec référence croisée à l'une des revendications 1 à 3, comprenant:
une source optique à large spectre (130); et
un modulateur (132) présentant une première entrée couplée à une sortie de la source optique à large spectre (130) pour recevoir un signal optique non modulé, une deuxième entrée adaptée pour recevoir un signal de modulation pour moduler le signal optique avec les données à transmettre au groupe de noeuds, et une sortie couplée au dispositif multiplexeur/démultiplexeur (140) et
adaptée pour fournir le signal optique modulé;
dans lequel la pluralité de dispositifs (146₁-146_{N}) du dispositif multiplexeur/démultiplexeur (140) comprend une pluralité d'interrupteurs optiques (146₁-146_{N}), et
dans lequel le noeud central (102) est adapté pour commander la pluralité d'interrupteurs optiques (146₁-146_{N}) de sorte que seuls les signaux optiques modulés associés aux noeuds dans le groupe soient envoyés à la porte de sortie.

8. Noeud central (102) selon la revendication 6 avec référence croisée à l'une des revendications 1, 2, 4 ou 5, comprenant:
une source optique à large spectre (130) couplée au dispositif multiplexeur/démultiplexeur (140) pour fournir un signal optique non modulé;
dans lequel la pluralité de dispositifs (146₁-146_{N}) du dispositif multiplexeur/démultiplexeur (140) comprend une pluralité de modulateurs (146₁-146_{N}), et
dans lequel le noeud central (102) est adapté pour commander sélectivement la pluralité de modulateurs (146₁-146_{N}) pour moduler de manière sélective les signaux optiques respectifs à la pluralité de sorties (144₁-144_{N}) de manière à comprendre les données à transmettre à un ou plusieurs groupes de noeuds dans le système de communication (100).

9. Noeud central (102) selon l'une des revendications 6 à 8, dans lequel chacun des noeuds (BS₁-BS₉, 112₁-112_{N}) dans le système de communication (100) a, lui attribuée, une longueur d'onde différente dans le large spectre fourni par la source optique à large spectre (130) et est adapté pour détecter un signal optique à la longueur d'onde attribuée, et dans lequel le dispositif multiplexeur/démultiplexeur (140) est adapté pour démultiplexer le signal optique reçu de la source optique à large spectre (130) en une pluralité de signaux optiques, les signaux optiques démultiplexés ayant des longueurs d'onde respectives correspondant aux longueurs d'onde attribuées aux noeuds respectifs (BS₁-BS₉, 112₁-112_{N}).

10. Noeud central (102) selon l'une des revendications 6 à 9, comprenant:
une pluralité de sources optiques (120₁-120_{N}) adaptées pour fournir des signaux optiques respectifs à des longueurs d'onde optiques respectives attribuées aux noeuds respectifs (BS₁-BS₉, 112₁-112_{N}) dans un système de communication (100),
dans lequel le dispositif multiplexeur/démultiplexeur (140) comprend une pluralité d'entrées pour recevoir les signaux optiques de la pluralité de sources optiques (120₁-120_{N}), et
dans lequel le dispositif multiplexeur/démultiplexeur (140) est adapté pour recevoir le signal optique de la source optique à large spectre (130) à l'une des entrées recevant également un signal optique de l'une de la pluralité de sources optiques (120₁-120_{N}),
ou pour recevoir le signal optique de la source optique à large spectre (130) à une entrée additionnelle.

11. Noeud central (102) selon l'une des revendications 6 à 10, dans lequel
le dispositif multiplexeur/démultiplexeur (140) comprend une grille de guides d'onde en réseau;
la source optique à large spectre (130) comprend une diode électroluminescente, et
les sources optiques (120₁-120_{N}) comprennent des dispositifs laser respectifs.

12. Système de communication sans fil (100), comprenant:
une pluralité de noeuds (BS₁-BS₉, 112₁-112_{N}) adaptés pour permettre une communication sans fil avec un ou plusieurs dispositifs sans fil; et
au moins un noeud central (102) selon l'une des revendications 6 à 11,
dans lequel l'au moins un noeud central (102) et un ou plusieurs parmi la pluralité de noeuds (BS₁-BS₉, 112₁-112_{N}) sont couplés par un réseau optique passif (104, 106₁-106_{N}, 108) formant le lien de relais entre le noeud central (102) et les noeuds (BS₁-BS₉, 112₁-112_{N}).

13. Procédé pour transmettre des données à un ou plusieurs groupes de noeuds (BS₁-BS₉, 112₁-112_{N}) dans un système de communication (100) présentant une pluralité de noeuds (BS₁-BS₉, 112₁-112_{N}) couplés à un noeud central (102) par un réseau optique passif (104, 106₁-106_{N}, 108), le procédé comprenant:
générer au noeud central (102) un signal optique à large spectre;
sélectionner à l'aide d'un dispositif multiplexeur/démultiplexeur (140) selon l'une des revendications 1 à 5 parmi le signal optique à large spectre les signaux optiques dont les longueurs d'onde correspondent à la longueur d'onde attribuée aux noeuds dans les un ou plusieurs groupes; et
fournir les données aux noeuds respectifs dans les un ou plusieurs groupes via le réseau optique passif (104, 106₁-106_{N}, 108) à l'aide des signaux optiques sélectionnés.
